# FASCICULE DE BREVET EUROPEEN

(11) **EP 3 962 797 B1**
(45) Date de publication et mention de la délivrance du brevet: **26.07.2023**
(21) Numéro de dépôt: 20728099.1
(22) Date de dépôt: 16.04.2020
(51) Int. Cl.: B62D 25/00, B60R 21/213, B62D 29/00, B62D 65/14, B62D 25/02

(54) **INSERT DE FIXATION D'ÉQUIPEMENT SUR CORPS CREUX DE CARROSSERIE DE VÉHICULE AUTOMOBILE**
EINSATZ ZUR BEFESTIGUNG VON AUSRÜSTUNG AN EINEM HOHLKÖRPER EINER KRAFTFAHRZEUGKAROSSERIEHÜLLE
INSERT FOR ATTACHING EQUIPMENT TO A HOLLOW BODY OF A MOTOR VEHICLE BODY SHELL

(30) Priorité: 29.04.2019 FR 1904518
(43) Date de publication de la demande: 09.03.2022
(73) Titulaire: PSA Automobiles SA, 78300 Poissy (FR)
(72) Inventeur: RIVIERRE, Laurent, 75015 PARIS (FR)
(86) Numéro de dépôt international: PCT/FR2020/000127
(87) Numéro de publication internationale: WO 2020/221967

(56) Documents cités:
- DE-A1-102015 210 485
- FR-A1- 2 954 201
- US-A1- 2016 229 457

## Description

### Domaine technique

La présente invention revendique la priorité de la demande française 1904518 déposée le 29 Avril 2019.

L'invention a trait au domaine de la carrosserie des véhicules automobiles, plus particulièrement à la fixation d'équipements sur des corps creux de la carrosserie, et encore plus particulièrement à la fixation d'un module de coussin gonflable sur une doublure de custode.

### Technique antérieure

L'assemblage de la caisse en blanc d'un véhicule automobile nécessite la fixation au cours de l'étape de ferrage de plusieurs pièces de carrosserie. A la suite des étapes ultérieures de peinture et/ou de cataphorèse, des équipements sont ensuite montés sur ces éléments de carrosserie. Dans certains cas, les pièces de carrosserie assemblées forment notamment des corps creux dans lesquels est placé au moins un insert d'obturation, principalement constitué par de la mousse expansible, et dont le rôle est de fermer le corps creux pour limiter ou empêcher la remontée des bruits extérieurs dans l'habitacle du véhicule. Par exemple, le document DE102015210485 décrit un véhicule selon le préambule de la revendication 1, équipé d'un tel insert. Il est aussi courant de fixer des équipements sur la carrosserie au moyen de vis de fixation s'engageant dans des orifices correspondants pratiqués dans la carrosserie. L'engagement des vis de fixation peut se faire via des inserts de fixation en matériau plastique mis en place dans les orifices après le traitement cataphorèse et mise en peinture de la caisse du véhicule.

Cependant, lorsque le ou les orifices sont à proximités d'un insert d'obturation, cela présente des difficultés en ce que le matériau expansible de l'insert d'obturation va s'expanser lors de l'étape de chauffage de la caisse dans le cadre de la cataphorèse et va ainsi potentiellement obturer le ou les orifices ou encore en déborder, en fonction de divers paramètres comme notamment le taux d'expansion du matériau, la taille du ou des orifices et la distance entre ledit matériau et ledit ou lesdits orifices. L'enlèvement de ce matériau expansé excédentaire occasionne une étape manuelle supplémentaire et peut également nuire à la finition et à la qualité perçues du véhicule.

### Exposé de l'invention

L'invention a pour objectif de pallier au moins un des inconvénients de l'état de la technique susmentionné. Plus particulièrement, l'invention a pour objectif de faciliter le montage des équipements sur les pièces de carrosserie formant un corps creux dans lequel est placé un joint ou insert d'obturation en mousse expansible. En ce sens, cette invention a donc aussi pour objectif d'optimiser le temps de montage des équipements et cela de manière simple et économique à mettre en oeuvre.

A cet effet, l'invention a pour objet un véhicule automobile comprenant une carrosserie avec au moins un corps creux; un insert d'obturation à produit moussant expansé, disposé dans l'au moins un corps creux ; un insert de fixation d'équipement, logé dans un orifice pratiqué dans l'au moins un corps creux ; remarquable en ce que l'orifice pratiqué dans l'au moins un corps creux est à une distance de l'insert d'obturation correspondant inférieure à 15mm; et l'insert de fixation comprend une face intérieure dans l'au moins un corps creux, le produit moussant expansé dans ledit corps creux contactant et épousant ladite face intérieure de l'insert de fixation.

Selon un mode avantageux de l'invention, l'insert de fixation est logé dans l'orifice avant dépôt de revêtement anticorrosion sur la carrosserie et traitement thermique de polymérisation dudit revêtement, de sorte que ledit insert est recouvert dudit revêtement.

Selon un mode avantageux de l'invention, le revêtement anticorrosion forme sur l'insert de fixation et la carrosserie adjacente audit insert une couche continue à une jonction entre ledit insert et ladite carrosserie.

Selon un mode avantageux de l'invention, l'insert d'obturation comprend un support étendu avec une rainure périphérique ouverte vers l'extérieur dans l'étendue dudit support, et un cordon du produit moussant expansé thermiquement et contactant le corps creux.

Selon un mode avantageux de l'invention, l'au moins un corps creux est délimité par une aile arrière et une doublure de ladite aile arrière, ledit corps creux s'étendant majoritairement verticalement et délimitant un bord arrière d'une entrée de porte arrière du véhicule.

Selon un mode avantageux de l'invention, le véhicule comprend l'équipement, ledit équipement étant un module de coussin gonflable fixé à la carrosserie au moyen d'une vis s'engageant dans l'insert de fixation.

Selon un mode avantageux de l'invention, le module de coussin gonflable est fixé contre la doublure d'aile arrière et est configuré pour déployer le coussin vers l'avant à hauteur du thorax d'un occupant du véhicule.

Selon un mode avantageux de l'invention, l'insert de fixation présente une dureté supérieure à 100° Shore.

Avantageusement, l'insert de fixation est dans un matériau sélectionné pour pouvoir résister aux cycles thermiques de l'étape de peinture sans dégradation de ses propriétés mécaniques.

L'invention a également pour objet un procédé de fabrication d'un véhicule, comprenant les étapes suivantes: ferrage d'éléments de carrosserie de manière à former la carrosserie en blanc du véhicule, ladite carrosserie formant au moins un corps creux logeant un insert d'obturation à produit moussant, et dans lequel est pratiqué un orifice destiné à loger un insert de fixation d'équipement ; application d'un revêtement anticorrosion sur la carrosserie en blanc et traitement thermique de polymérisation dudit revêtement ; remarquable en ce que l'orifice pratiqué dans l'au moins un corps creux est à une distance de l'insert d'obturation correspondant inférieure à 15mm et l'insert de fixation est logé dans ledit orifice avant l'étape d'application du revêtement anticorrosion et de traitement thermique de manière à servir de limite d'expansion du matériau moussant lors dudit traitement thermique.

Selon un mode avantageux de l'invention, le véhicule est conforme à l'invention.

Les mesures de l'invention sont intéressantes en ce que l'insert de fixation sert en fait à la fois à empêcher le débordement de la mousse expansée de l'insert d'obturation dans l'habitacle au travers d'un trou ou orifice de fixation d'une pièce de carrosserie présentant au moins un corps creux, mais également d'interface de fixation d'un équipement sur la même pièce de carrosserie. La fonction antidébordement de l'insert de fixation est d'autant plus intéressante qu'elle permet ainsi de garantir une bonne expansion du produit moussant de l'insert d'obturation dans le corps creux de la pièce de carrosserie lors du traitement thermique. Les mesures de l'invention sont encore plus intéressantes en ce que l'insert de fixation permet aussi de faciliter et de gagner du temps dans le montage des équipements. En ce sens, les mesures de l'invention permettent donc d'éviter une alternative plus longue à mettre en place, qui consisterait en deux étapes successives, à savoir la mise en place d'un insert pour garantir le bon gonflement du produit moussant et empêcher son débordement au travers du trou de fixation de la pièce de carrosserie, puis le retrait de cet insert pour mettre en place une interface de fixation en plastique d'une vis à matériau tendre permettant de fixer l'équipement.

D'autres caractéristiques et avantages de la présente invention seront mieux compris à l'aide de la description et des dessins.

### Brève description des dessins

[Fig 1] est une vue en perspective du montage d'un module de coussin gonflable sur une doublure de custode d'un véhicule automobile selon l'invention.
[Fig 2] est une vue en perspective de la doublure de custode de la figure 1, avant fixation du module de coussin gonflable, illustrant par transparence un insert d'obturation logé dans le corps creux formé par la doublure de custode.
[Fig 3] est une vue en coupe transversale du corps creux formé par la doublure de custode, la coupe étant au niveau de la vis de l'insert de fixation.

### Description détaillée

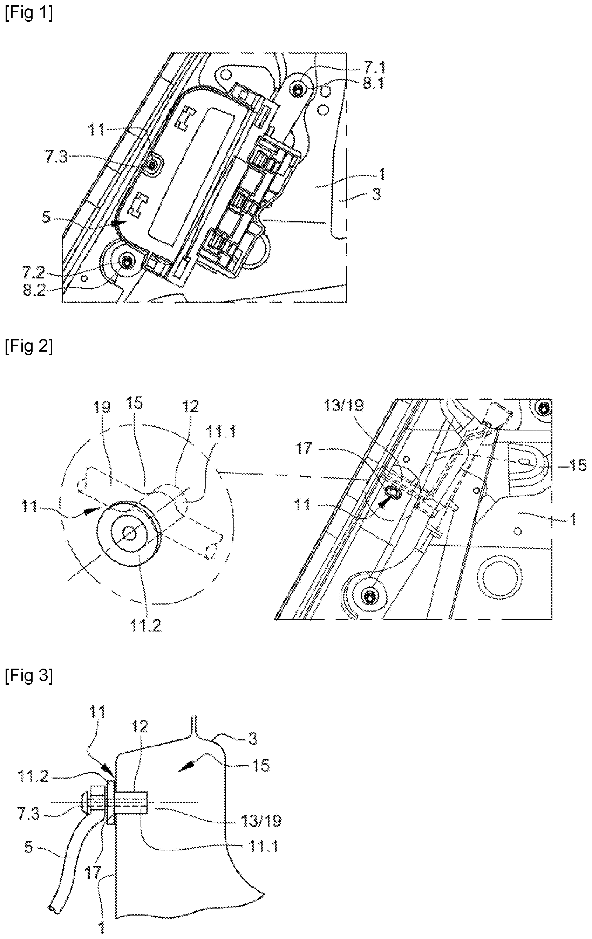

La figure 1 illustre une vue en perspective du montage d'un module de coussin gonflable sur une portion d'une doublure de custode d'un véhicule automobile. La doublure de custode 1 est une pièce de carrosserie fixée par soudure sur la caisse en blanc 3, et qui est formée par au moins un corps creux (non visible) dans lequel au moins un insert d'obturation (non visible) à produit moussant (non visible) est disposé pour amortir dans l'habitacle les bruits extérieurs. Concernant le module de coussin gonflable 5, il est configuré pour déployer un coussin (non visible) vers l'avant à hauteur du thorax d'un occupant du véhicule (non représentés). Cet équipement 5 est fixé en particulier sur la doublure de custode 1 à l'aide de plusieurs vis de fixation 7.1, 7.2, 7.3. En l'occurrence sur la figure 1, le module de coussin gonflable 5 est fixé sur la doublure de custode 1 à l'aide de trois vis de fixation 7.1, 7.2, 7.3. Ces vis de fixation 7.1, 7.2, 7.3 sont orientées de façon opposées l'une à l'autre et sont disposées sur le contour du module de coussin gonflable 5. Toutefois, si deux de ces vis 7.1, 7.2 collaborent chacune avec un écrou 8.1, 8.2 au travers d'un orifice (non visible) pratiqué sur la doublure de custode 1, la troisième vis 7.3 qui est située à proximité du corps creux (non visible) de la doublure de custode 1, est quant à elle engagée dans un insert de fixation 11 logé dans un orifice (non visible) pratiqué dans ce même corps creux (non visible).

La figure 2 est une vue en perspective de la doublure de custode de la figure 1, avant fixation du module de coussin gonflable. Cette figure 2 permet d'observer par transparence l'insert d'obturation 13 logé dans le corps creux 15 formé par la doublure de custode 1 mais également l'orifice 17 pratiqué dans le corps creux 15 et dans lequel est inséré l'insert de fixation 11. Cet orifice 17 est en fait à une distance de l'insert d'obturation 13 inférieure à 15 mm. La mise en place de l'insert de fixation 11 dans l'orifice 17 est en particulier effectuée avant dépôt de revêtement anticorrosion (non représenté) sur la carrosserie et traitement thermique de polymérisation de ce même revêtement anticorrosion, ce dernier formant en quelque sorte sur l'insert de fixation 11 et la carrosserie adjacente 1, à cet insert 11, une couche fine continue. De ce fait, l'insert de fixation 11 se trouve aussi recouvert et protégé par le revêtement anticorrosion. Avantageusement, l'insert de fixation 11 est en plastique et présente une dureté supérieure à 100° Shore A. Le matériau plastique est sélectionné parmi les matériaux compatibles avec le revêtement anticorrosion, c'est-à-dire sur lequel le revêtement en question va adhérer de manière satisfaisante. Le matériau de l'insert de fixation 11 est aussi avantageusement sélectionné pour résister aux cycles thermiques de l'étape de peinture sans dégradation de ses propriétés thermiques.

Parallèlement, lors du traitement thermique de polymérisation du revêtement, l'insert d'obturation 13, s'étend aussi dans le corps creux 15 de la doublure de custode 1. Avantageusement, cet insert d'obturation 13 comprend un support étendu (non représenté) avec une rainure périphérique ouverte (non représentée) vers l'extérieur de ce support, et un cordon de produit moussant 19 qui s'expanse sous l'action de l'augmentation de chaleur, contactant et épousant ainsi la face intérieure 12 de l'insert de fixation 11 qui est positionnée dans le corps creux 15.

La vue élargie de la figure 2 montre en particulier l'insert de fixation 11 comprenant une portion principale 11.1, généralement cylindrique et insérée dans l'orifice, et une collerette 11.2 prenant appui sur la doublure de custode 1. La portion principale 11.1 étant logée dans le corps creux, sa surface extérieure forme alors la face intérieure 12 de l'insert de fixation 11. On peut observer qu'une portion du cordon de produit moussant expansé 19 formant l'insert d'obturation 13 contacte et épouse la forme de la face intérieure 12 de l'insert de fixation 11, sur la portion principale 11.1 dudit insert 11.

La figure 3 est une vue en coupe transversale du corps creux formé par la doublure de custode 1 sur laquelle est fixée un module de coussin gonflable (voir figure 1). La coupe transversale de cette figure 3 est en particulier réalisée au niveau de l'insert de fixation 11 et de la vis de fixation 7.3, préférentiellement à matériau tendre comme du plastique ou du moins non-métallique, qui est engagée dans l'insert de fixation 11 pour maintenir fixer le module de coussin gonflable 5 sur la doublure de custode 1. En l'occurrence sur cette figure 3, le corps creux est délimité par une aile arrière 3 et une doublure 1 de ladite aile arrière, le corps creux 15 s'étendant majoritairement verticalement et délimitant un bord arrière d'une entrée de porte arrière de véhicule (non représentés). La portion principale 11.1 de l'insert de fixation 11 est logée dans l'orifice 17 pratiqué dans le corps creux 15, la collerette 11.2 de ce même insert 11 étant en appui sur la doublure de custode 1 (voir aussi figure 2). Sur cette figure 3, le produit moussant 19 de l'insert d'obturation 13 est supposé occuper l'ensemble du volume du corps creux 15.

De manière générale, lors de la fabrication d'un véhicule automobile selon l'invention, les éléments de carrosserie sont, dans un premier temps, ferrés de manière à former la caisse ou carrosserie en blanc. Cette carrosserie présente au moins une pièce de carrosserie ayant un corps creux qui loge un insert d'obturation à produit moussant expansé. Afin de fixer ultérieurement un équipement sur le corps creux de cette pièce de carrosserie, notamment à proximité de l'insert d'obturation, au moins un orifice situé à une distance inférieure à 15 mm de l'insert d'obturation est également présent sur le corps creux de cette pièce de carrosserie. Un insert de fixation est logé dans l'orifice ou chacun des orifices en question. Dans un deuxième temps, un revêtement d'anticorrosion ainsi qu'un traitement thermique de polymérisation de ce revêtement, est appliqué sur l'ensemble des pièces de la carrosserie et donc par conséquent sur l'insert de fixation de la pièce de carrosserie avec un corps creux. Lors de ce même traitement thermique, le produit moussant expansé de l'insert d'obturation s'étend également dans le corps creux et rentre en contact et épouse la face intérieure de l'insert de fixation située dans le corps creux. De cette manière l'insert de fixation du véhicule selon l'invention sert à la fois à limiter l'expansion du matériau moussant de l'insert d'obturation au travers de l'orifice, mais également d'interface de fixation d'un équipement via l'engagement d'une vis de fixation à matériau tendre dans l'insert de fixation puisqu'au niveau de l'orifice aucun surplus de revêtement ne doit être enlevé.

## Revendications

1. Véhicule automobile comprenant :
- une carrosserie (1) avec au moins un corps creux (15);
- un insert d'obturation (13) à produit moussant expansé (19), disposé dans l'au moins un corps creux (15);
- un insert de fixation (11) d'équipement (5), logé dans un orifice (17) pratiqué dans l'au moins un corps creux (15);
**caractérisé en ce que**
l'orifice (17) pratiqué dans l'au moins un corps creux (15) est à une distance de l'insert d'obturation (13) correspondant inférieure à 15mm; et l'insert de fixation (11) comprend une face intérieure (12) dans l'au moins un corps creux (15), le produit moussant expansé (19) dans ledit corps creux (15) contactant et épousant ladite face intérieure (12) de l'insert de fixation (11).

2. Véhicule automobile selon la revendication 1, **caractérisé en ce que** l'insert de fixation (11) est logé dans l'orifice (17) avant dépôt de revêtement anticorrosion sur la carrosserie (1) et traitement thermique de polymérisation dudit revêtement, de sorte que ledit insert (11) est recouvert dudit revêtement.

3. Véhicule automobile selon la revendication 2, **caractérisé en ce que** le revêtement anticorrosion forme sur l'insert de fixation (11) et la carrosserie (1) adjacente audit insert (11) une couche continue à une jonction entre ledit insert (11) et ladite carrosserie (1).

4. Véhicule automobile selon l'une des revendications 1 à 3, **caractérisé en ce que** l'insert d'obturation (13) comprend un support étendu avec une rainure périphérique ouverte vers l'extérieur dans l'étendue dudit support, et un cordon du produit moussant expansé (19) thermiquement et contactant le corps creux (15).

5. Véhicule automobile selon l'une des revendications 1 à 4, **caractérisé en ce que** l'au moins un corps creux (15) est délimité par une aile arrière (3) et une doublure (1) de ladite aile arrière, ledit corps creux (15) s'étendant majoritairement verticalement et délimitant un bord arrière d'une entrée de porte arrière du véhicule.

6. Véhicule automobile selon l'une des revendications 1 à 5, **caractérisé en ce que** ledit véhicule comprend l'équipement (5), ledit équipement (5) étant un module de coussin gonflable fixé à la carrosserie (1) au moyen d'une vis (7.3) s'engageant dans l'insert de fixation (11).

7. Véhicule automobile selon les revendications 5 et 6, **caractérisé en ce que** le module de coussin gonflable (5) est fixé contre la doublure (1) d'aile arrière (3) et est configuré pour déployer le coussin vers l'avant à hauteur du thorax d'un occupant du véhicule.

8. Véhicule automobile selon l'une des revendications 1 à 7, **caractérisé en ce que** l'insert de fixation (11) présente une dureté supérieure à 100° Shore A.

9. Procédé de fabrication d'un véhicule, comprenant les étapes suivantes :
- ferrage d'éléments de carrosserie (1, 3) de manière à former la carrosserie en blanc du véhicule, ladite carrosserie (1) formant au moins un corps creux (15) logeant un insert d'obturation (13) à produit moussant (19), et dans lequel est pratiqué un orifice (17) destiné à loger un insert de fixation (11) d'équipement (5);
- application d'un revêtement anticorrosion sur la carrosserie en blanc et traitement thermique de polymérisation dudit revêtement ;
**caractérisé en ce que**
l'orifice (17) pratiqué dans l'au moins un corps creux (15) est à une distance de l'insert d'obturation (13) correspondant inférieure à 15mm et l'insert de fixation (11) est logé dans ledit orifice (17) avant l'étape d'application du revêtement anticorrosion et de traitement thermique de manière à servir de limite d'expansion du matériau moussant (19) lors dudit traitement thermique.

10. Procédé selon la revendication 9, **caractérisé en ce que** le véhicule est selon l'une des revendications 1 à 7.

## Patentansprüche

1. Kraftfahrzeug, umfassend:
- eine Karosserie (1) mit mindestens einem Hohlkörper (15);
- einem in dem mindestens einen Hohlkörper (15) angeordneten Verschlusseinsatz (13) mit expandiertem Schaumstoff (19);
- einen Befestigungseinsatz (11) für die Ausrüstung (5), der in einer Öffnung (17) in dem mindestens einen Hohlkörper (15) aufgenommen ist;
**dadurch gekennzeichnet, dass**
die Öffnung (17) in dem mindestens einen Hohlkörper (15) in einem entsprechenden Abstand zum Verschlusseinsatz (13) von weniger als 15 mm liegt; und der Befestigungseinsatz (11) eine Innenfläche (12) in dem mindestens einen Hohlkörper (15) aufweist, wobei das geschäumte Produkt (19) in dem Hohlkörper (15) die Innenfläche (12) des Befestigungseinsatzes (11) berührt und mit ihr übereinstimmt.

2. Kraftfahrzeug nach Anspruch 1, **dadurch gekennzeichnet, dass** der Befestigungseinsatz (11) in der Öffnung (17) vor dem Aufbringen einer korrosionshemmenden Beschichtung auf die Karosserie (1) und der thermischen Polymerisationsbehandlung der Beschichtung untergebracht ist, sodass der Einsatz (11) mit der Beschichtung bedeckt ist.

3. Kraftfahrzeug nach Anspruch 2, **dadurch gekennzeichnet, dass** die korrosionshemmende Beschichtung auf dem Befestigungseinsatz (11) und der Karosserie (1) neben dem Einsatz (11) eine kontinuierliche Schicht an einer Verbindung zwischen dem Einsatz (11) und der Karosserie (1) bildet.

4. Kraftfahrzeug nach einem der Ansprüche 1 bis 3, **dadurch gekennzeichnet, dass** der Verschlusseinsatz (13) einen ausgeweiteten Träger mit einer nach außen offenen Umfangsnut in der Erstreckung des Trägers und eine Schnur des thermisch expandierten Schaummaterials (19) umfasst, die den Hohlkörper (15) kontaktiert.

5. Kraftfahrzeug nach einem der Ansprüche 1 bis 4, **dadurch gekennzeichnet, dass** der mindestens eine Hohlkörper (15) durch einen hinteren Flügel (3) und eine Verkleidung (1) des hinteren Flügels begrenzt ist, wobei sich der Hohlkörper (15) im Wesentlichen vertikal erstreckt und einen hinteren Rand eines hinteren Türeinlasses des Fahrzeugs begrenzt.

6. Kraftfahrzeug nach einem der Ansprüche 1 bis 5, **dadurch gekennzeichnet, dass** das Fahrzeug die Einrichtung (5) umfasst, wobei die Einrichtung (5) ein Airbagmodul ist, das an der Karosserie (1) mittels einer Schraube (7.3) befestigt ist, die in den Befestigungseinsatz (11) eingreift.

7. Kraftfahrzeug nach den Ansprüchen 5 und 6, **dadurch gekennzeichnet, dass** das Airbagmodul (5) an der hinteren Flügelverkleidung (1) befestigt ist und so konfiguriert ist, dass es den Airbag in Höhe des Brustkorbs eines Fahrzeuginsassen nach vorne ausrichtet.

8. Kraftfahrzeug nach einem der Ansprüche 1 bis 7, **dadurch gekennzeichnet, dass** der Befestigungseinsatz (11) eine Härte von mehr als 100° Shore A aufweist.

9. Verfahren zur Herstellung eines Fahrzeugs, das folgende Schritte umfasst:
- Verschließen von Karosserieteilen (1, 3) zur Bildung der Weiß-Karosserie des Fahrzeugs, wobei die Karosserie (1) mindestens einen Hohlkörper (15) bildet, der einen Verschlusseinsatz (13) mit Schaumstoff (19) aufnimmt und in dem eine Öffnung (17) zur Aufnahme eines Befestigungseinsatzes (11) der Ausrüstung (5) ausgebildet ist;
- Auftragen einer Korrosionsschutzbeschichtung auf den Weiß-Aufbau und Wärmebehandlung der Polymerisation dieser Beschichtung;
**dadurch gekennzeichnet, dass**
Die in dem mindestens einen Hohlkörper (15) ausgebildete Öffnung (17) ist in einem Abstand von dem entsprechenden Verschlusseinsatz (13) von weniger als 15 mm angeordnet und der Befestigungseinsatz (11) wird vor dem Aufbringungs- und Wärmebehandlungsschritt als Ausdehnungsgrenze des schäumenden Materials (19) in der Öffnung (17) aufgenommen) bei der Wärmebehandlung.

10. Verfahren nach Anspruch 9, **dadurch gekennzeichnet, dass** das Fahrzeug gemäß einem der Ansprüche 1 bis 7 ist.

## Claims

1. Motor vehicle comprising:
- a bodywork (1) with at least one hollow body (15);
- a filler insert (13) with an expanded foaming product (19), placed in at least one hollow body (15);
- a fitting insert (11) of equipment (5), housed in an opening (17) in at least one hollow body (15);
**characterized by**
the hole (17) in at least one hollow body (15) is at a distance from the closing insert (13) of less than 15mm; and the attachment insert (11) includes an inner face (12) in at least one hollow body (15), the foaming product expanded (19) in that hollow body (15) contacting and marrying the inner face (12) of the attachment insert (11).

2. Motor vehicle according to Claim 1, **characterized by** the fact that the attachment insert (11) is housed in the opening (17) before the deposit of corrosion coating on the body (1) and the thermal treatment of polymerization of the lining, so that the insert (11) is covered with the lining.

3. Motor vehicle according to Claim 2, characterized as the corrosion coating forms on the attachment insert (11) and the body (1) adjacent to that insert (11) a continuous layer at a junction between that insert (11) and that body (1).

4. Motor vehicle according to one of the claims 1 to 3, characterized that the shutter insert (13) includes an extended support with a peripheral groove open outwards in the scope of the support, and a cord of the foaming product expanded (19) thermally and contacting the hollow body (15).

5. Motor vehicle according to one of the claims 1 to 4, **characterized by** that at least one hollow body (15) is delimited by a rear wing (3) and a lining (1) of the said rear wing, the said hollow body (15) being predominantly vertical and delimiting a rear edge of a rear door entrance of the vehicle.

6. Motor vehicle in accordance with one of the claims 1 to 5, characterized as the vehicle includes equipment (5), the equipment (5) being an air cushion module attached to the body (1) by means of a screw (7.3) engaged in the attachment insert (11).

7. Motor vehicle in accordance with Claims 5 and 6, characterized as the air bag module (5) is attached to the rear wing lining (1) (3) and is configured to deploy the cushion forward at the height of the thorax of an occupant of the vehicle.

8. Motor vehicle according to one of the claims 1 to 7, characterized as the attachment insert (11) has a hardness greater than 100° Shore A.

9. A vehicle manufacturing process, including the following steps:
- fermentation of body parts (1, 3) in such a way as to form the white body of the vehicle, the said body (1) forming at least one hollow body (15) housing a sealing insert (13) with a foaming product (19), and in which an opening (17) is carried out to accommodate a fixing insert (11) equipment (5);
- application of an anti-corrosion coating on the white body and thermal treatment of its polymerization;
**characterized by**
the hole (17) in at least one hollow body (15) is at a distance from the sealing insert (13) of less than 15mm and the fixing insert (11) is housed in that hole (17) prior to the application of the corrosion coating and heat treatment so as to serve as the limit of expansion of the foaming material (19) during the said heat treatment.

10. Process according to Claim 9, characterized as the vehicle is according to one of Claims 1 to 7.
